# EUROPEAN PATENT SPECIFICATION

(11) **EP 2 997 815 B1**
(45) Date of publication and mention of the grant of the patent: **02.05.2018**
(21) Application number: 15186088.9
(22) Date of filing: 21.09.2015
(51) Int. Cl.: A01F 25/20

(54) **APPARATUS FOR LOADING FIBROUS PRODUCTS**
VORRICHTUNG ZUM LADEN VON FASERPRODUKTEN
APPAREIL DE CHARGEMENT DE PRODUITS FIBREUX

(30) Priority: 22.09.2014 IT MI20140284 U
(43) Date of publication of application: 23.03.2016
(73) Proprietor: SGARIBOLDI S.r.l., 26845 Codogno (LO) (IT)
(72) Inventor: SGARIBOLDI, Giuseppe, 26823 CAMAIRAGO (LO) (IT)
(74) Representative: Branca, Emanuela

(56) References cited:
- CA-A1- 2 451 564
- DE-A1- 19 960 868
- DE-U1-202012 103 905
- GB-A- 2 111 375

## Description

The present invention refers to an apparatus for loading fibrous products, in particular fibrous products for animal farming.

It is known that in animal farming it is often necessary to carry out the advance cutting and mixing of fibrous products, like for example hay, straw, cereals, plants, fruit, vegetables and tuberous plants, intended for feeding for example bovines. These operations are generally carried out through cutter-mixers, which mix the fibrous products possibly carrying out prior shredding.

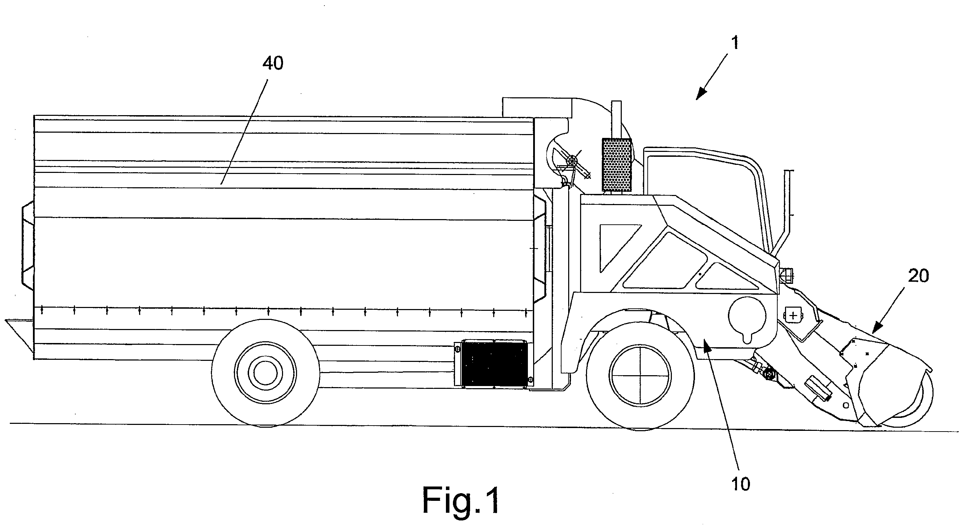

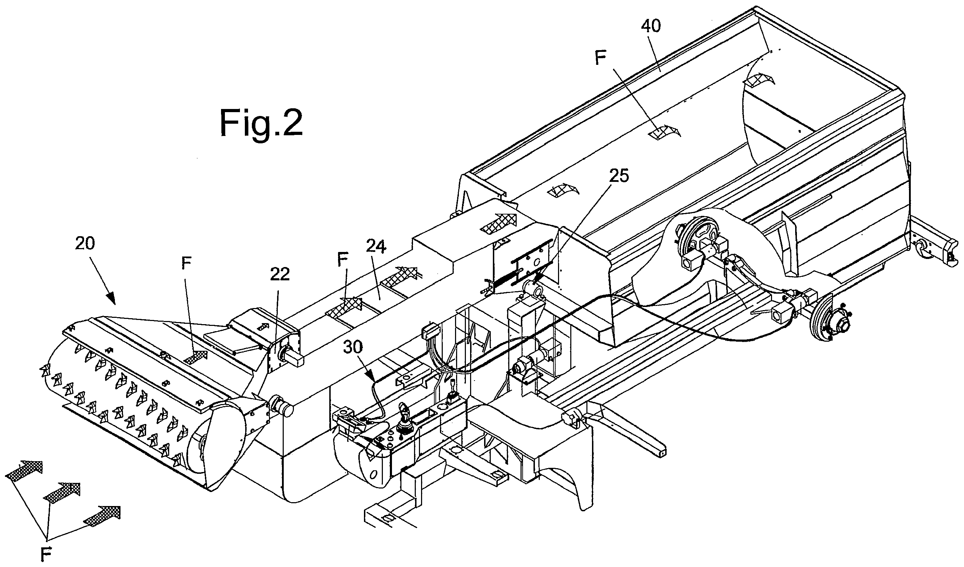

An example of the aforementioned cutter-mixers is known from document EP 1 449 426 B1, filed to the same Applicant, which will be described briefly hereafter with the help of figures 1 and 2 of the prior art. As can be seen in figures 1 and 2 of the prior art, the known cutter-mixer 1 comprises a self-propelled means 10 on the front portion of which a desilaging device 20 is engaged in an oscillating manner, provided with a conveyor 24 suitable for loading the fibrous products to be mixed inside a container 40. Such a container 40 is also mounted on the self-propelled means 10 and is configured to carry out the mixing of the fibrous products inside it. An electronic weighing system 30 is operatively connected to a drive mechanism group 25 and is configured for varying the speed of the conveyor 24 as a function of the weight and type of fibrous products loaded, so as to send the fibrous products in defined points of the container 40 as shown by the arrows F in figure 2.

Although the electronic weighing system 30 allows satisfactory control of the conveyor 24 and, consequently, allows satisfactory distribution of the fibrous products inside the container 40, the Applicant has found that the cutter-mixers according to the prior art can be improved in some aspects, mainly in relation to the uniformity of the distribution obtained inside the containers themselves. In particular, the Applicant has found that the conveyor 24 of known apparatuses tends to distribute the fibrous products inside the container 40 in a variable manner, depending on the position taken up by the desilaging device 20 and the weight of the fibrous products loaded. This leads to the formation of collection points at the proximal, central or distal areas of the container 40 with respect to the desilaging device 20. These collection points are variable based on the angle of inclination of the desilaging device 20 and, consequently, are the cause of low quality of mixing of the animal feed, which therefore needs increased mixing time to obtain the desired quality.

Both document DE 19960868 A1 and document CA 2451564 A1 disclose respective apparatuses for loading fibrous products according to the preamble of claim 1, wherein each apparatus is provided with a first conveyor and with a second conveyor, operatively arranged between the first conveyor and the container wherein the mixing of the fibrous products is performed. However, none of these apparatuses is provided with means or devices capable of managing the operation of the first and the second conveyor, so as to evenly distribute the fibrous products in the container and to fill unfilled or empty areas of said container.

The purpose of the present invention is therefore to avoid the aforementioned drawback and, in particular, to devise an apparatus for loading fibrous products that is able to distribute the amount of fibrous products evenly inside the container.

This and other purposes according to the present invention are accomplished by making an apparatus for loading fibrous products as outlined in claim 1.

Further characteristics of the invention are highlighted by the dependent claims, which are an integral part of the present description.

The characteristics and advantages of an apparatus for loading fibrous products according to the present invention will become clearer from the following description, given as a non-limiting example, referring to the attached schematic drawings, in which:
figure 1 is a schematic side view of an embodiment of a cutter-mixer according to the prior art;
figure 2 is a schematic perspective view of an embodiment of a cutter-mixer according to the prior art;
figure 3 is a schematic side view of a first embodiment of an apparatus for loading fibrous products according to the present invention; and
figure 4 is a schematic side view of a second embodiment of an apparatus for loading fibrous products according to the present invention.

With reference to the figures, an apparatus for loading fibrous products is shown, wholly indicated with reference numeral 100. The apparatus 100 comprises at least one motorised desilaging device 102 configured to collect a predetermined amount of fibrous products from the ground or from a similar support surface. The support surface can, for example, consist of a raised plane, which can be raised from the ground up to the maximum height able to be reached by the motorised desilaging device 102.

Advantageously, the motorised desilaging device 102 is provided with a box-like body 110, having a substantially tubular configuration, preferably polyhedron-shaped, the profile of which in section can vary as a function of the requirements and the contingent constructive choices. For the purposes of the present invention, the box-like body 110 can also have one or more upper openings, or be completely open on top.

Preferably, the motorised desilaging device 102 is provided with at least one picker 107, or a similar collection member, the actuation of which allows the fibrous products to be picked up from the ground, or from a raised plane and allows the same fibrous products to be deposited in the box-like body 110. The apparatus 100 also comprises a first conveyor (not illustrated) that preferably lies inside the aforementioned box-like body 110 to receive the fibrous products collected and to convey them from the place of collection along a respective predetermined advancing direction.

In detail, the first conveyor preferably comprises at least one conveyor belt suitably configured for conveying the aforementioned fibrous products. Advantageously, the first conveyor can be actuated and controlled through a drive mechanism group (not illustrated) and through suitable motion transmission means (also not illustrated). In accordance with a preferred solution of the present invention, the first conveyor can comprise a motorised shredder (not illustrated), advantageously a blade mill, configured to carry out prior shredding of the fibrous products if they have long fibres.

The motorised desilaging device 102 is advantageously rotatable about a substantially horizontal rotation axis between a first position A, in which the picker 107, carried by it, is at the ground, and a second position A', in which the picker 107 is raised with respect to the first position A. The rotation of the motorised desilaging device 102 between the first position A and the second position A' allows the movement of the picker 107 height-wise, so that it is possible to collect fibrous products even arranged on surfaces that are raised with respect to the ground.

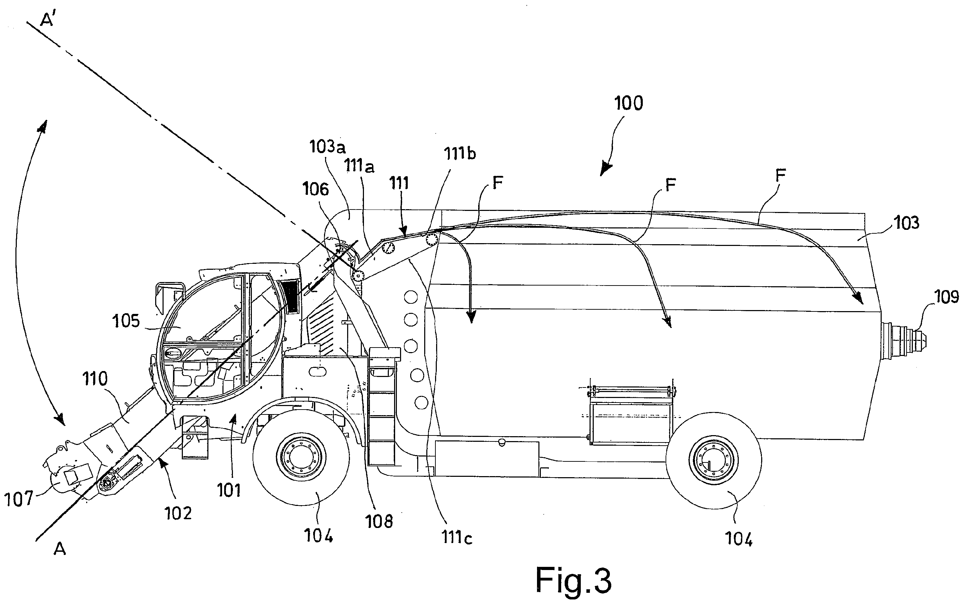

The rotation of the motorised desilaging device 102 is made possible by the hinging thereof to a suitable self-propelled means 101, also forming part of the apparatus 100, like for example a truck, a tractor or a tracked vehicle. As can be seen in figure 3, the motorised desilaging device 102 is hinged to a pair of arms 106 that extend from the self-propelled means 101 at a front area thereof. Again with reference to figure 3, the apparatus 100 comprises at least one container 103, suitable fixed to the self-propelled means 101 at a rear area thereof to receive and contain the fibrous products collected and loaded by the motorised desilaging device 102. The container 103 advantageously comprises at least one mixer 109, like for example a paddle reel, moved by the driving unit of the self-propelled means 101, to carry out the mixing of the fibrous products contained therein.

The apparatus 100 comprises a weighing system (not illustrated), preferably electronic, operatively connected to the drive mechanism group of the first conveyor, to control the conveying speed of the fibrous products loaded onto the first conveyor and conveyed towards the container 103.

In accordance with an advantageous aspect of the present invention, the apparatus 100 comprises at least one second conveyor 111 operatively arranged between the first conveyor and the container 103. The second conveyor 111 is configured to receive the fibrous products coming from the first conveyor and to distribute such fibrous products inside the container 103. The interaction between the second conveyor 111 and the first conveyor advantageously determines the dropping and collection point of the fibrous products loaded inside the container 103, distributing the fibrous products evenly, in other words filling the areas of the container 103 that are not filled and/or less filled.

In order to allow even distribution of the fibrous products loaded inside the container 103, the second conveyor 111 is mounted on the apparatus 100 in a fixed manner, so as to always maintain the same angle of inclination with respect to the support plane of the apparatus 100 itself. The uneven distribution of the fibrous products caused by the different angles of inclination that the motorised desilaging device 102 can take up with respect to the container 103 is thus compensated. In a preferred embodiment, the second conveyor 111 can consist of a motorised conveyor belt provided with two or three support rollers the axes of symmetry of which are not coplanar.

In detail, the second conveyor 111 is fixed at one of its ends to the self-propelled means 101, preferably to the pair of arms 106 on which the motorised desilaging device 102 is hinged, so as to always be able to maintain its predetermined inclination with respect to the first conveyor and allow the fibrous products previously loaded to be deposited evenly.

The advancing speed of the second conveyor 111 is adjustable with respect to the advancing speed of the first conveyor, so as to throw or drop the fibrous products received from the first conveyor inside the container 103, filling the less filled areas thereof. In other words, the adjustment of the advancing speed of the second conveyor 111, managed as a function of the data coming from the weighing system, allows the management of the range of the fibrous products thrown or dropped inside the container 103.

As can be seen in figure 3, the second conveyor 111 is arranged at least partially, preferably completely, outside of the container 103 so as not to be influenced by possible mechanical stresses that bear on the container 103 itself and that are caused, for example, by the movement of the mixer 109. Again with reference to figure 3, the second conveyor 111 has a substantially triangular configuration and comprises a first conveying branch 111a that extends substantially from the first conveyor towards the container 103, a second conveying branch 111b, inclined with respect to the first conveying branch 111a and that extends with respect to the latter towards the container 103, and a return branch 111c that extends from the second conveying branch 111b to the first conveying branch 111a, towards the first conveyor, so that the conveying branches 111a, 111b and the return branch 111c are mutually overlapped.

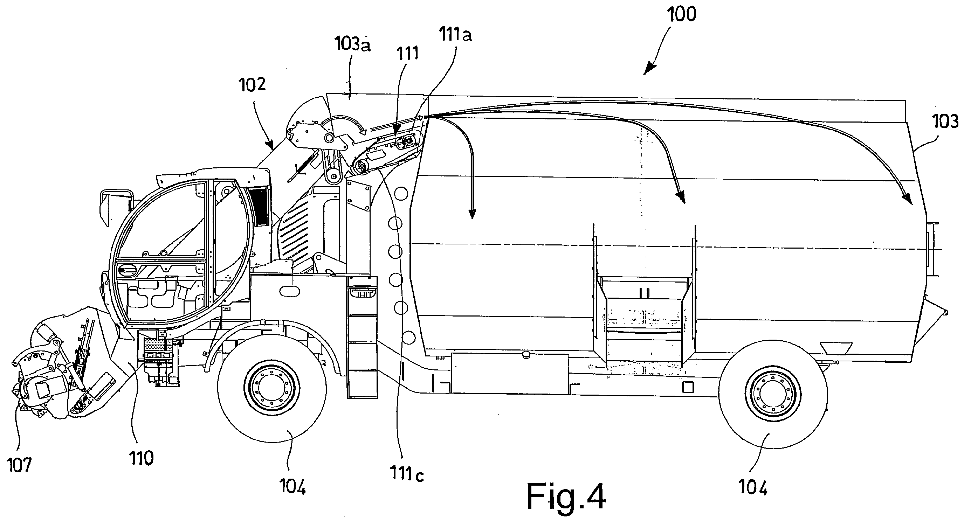

With reference to figure 4, the second conveyor 111 has a substantially flat configuration and comprises a single conveying branch 111a, which extends substantially from the first conveyor towards the container 103, and a single return branch 111c, which extends in the opposite direction with respect to the single conveying branch 111a, so that the single conveying branch 111a and the single return branch 111c are mutually overlapped.

In accordance with a further advantageous aspect of the present invention, the apparatus 100 can also be provided with at least one storage unit 103a of the fibrous products loaded from the first conveyor, such a storage unit 103a being mounted on the motorised desilaging device 102. As can be seen in figure 3, the storage unit 103a is at least partially delimited between the motorised desilaging device 102, the first conveyor, the second conveyor 111 and the container 103, so as to allow a predetermined amount of loaded fibrous products to collect, in the case in which the advancing speed of the second conveyor 111 is lower than the advancing speed of the first conveyor, so as to slow down the advancing flow of the fibrous products loaded. Advantageously, in order to avoid the storage unit 103a to be provided, the advancing speed of the second conveyor 111 is kept equal to or greater than the advancing speed of the first conveyor.

The interaction between the first conveyor and the second conveyor 111, managed by the weighing system, can be driven and controlled by an operator through a suitable driving cabin 105 arranged on the self-propelled means 101, or remotely through suitable remote control means that communicate with the apparatus 100. Alternatively, it is possible to foresee for automatic control means to be provided for controlling the interaction between the first conveyor and the second conveyor 111 and, consequently, the distribution of the fibrous products inside the container 103. Such automatic driving and control means can for example comprise at least one detector capable of emitting at least one notification signal of the filling state of the container 103.

The automatic control of the interaction between the first and the second conveyor 111 helps to evenly distribute the fibrous products inside the container 103, filling the less filled or empty areas thereof. Of course, the automatic driving and control means can comprise any known form of detector and/or sensor and/or detection system capable of detecting the filling state of the container 103. The automatic driving and control means include the weighing system already present inside the container 103, so that the weighing system itself emits the notification signals necessary for managing the interaction between the first conveyor and the second conveyor 111.

The operation of the apparatus 100 is as follows. The operator in the driving cabin 105 drives the self-propelled means 101 towards a pile of fibrous products and adjusts the inclination of the motorised desilaging device 102 according to the height from the ground of the pile of fibrous products. As soon as the motorised desilaging device 102 comes into contact with the pile of fibrous products, the picker 107 loads them onto the first conveyor, which conveys them towards the container 103 through the second conveyor 111. If necessary, in the case of long-fibre fibrous products, the motorised shredder is actuated and carries out prior shredding of the fibrous products. The fibrous products end up inside the container 103, always passing through the second conveyor 111 that divides them along the container 103 itself. At this point the mixer is actuated and, in shorter time periods with respect to known apparatuses, mixes the fibrous products contained in the container 103 until the animal feed is obtained.

It has thus been seen that the apparatus for loading fibrous products according to the present invention achieves the purposes highlighted earlier.

The apparatus for loading fibrous products thus conceived can in any case undergo numerous modifications and variants, all of which are covered by the same innovative concept; moreover, all of the details can be replaced by technically equivalent elements. In practice, the materials used, as well as the shapes and sizes, can be whatever according to the technical requirements.

The scope of protection of the invention is therefore defined by the attached claims.

## Claims

1. Apparatus (100) for loading fibrous products comprising:
- at least one motorised desilaging device (102),
- at least one first conveyor,
- at least one container (103), and
- at least one second conveyor (111) operatively arranged between said first conveyor and said container (103),
said motorised desilaging device (102) being configured for loading said fibrous products onto said first conveyor, said first conveyor being configured for transporting said fibrous products towards said container (103), and said second conveyor (111) being configured for receiving said fibrous products from said first conveyor and for distributing said fibrous products inside said container (103), said apparatus (100) being **characterised in that** it comprises a weighing system for weighing the fibrous products loaded inside the container (103), wherein said weighing system is operatively connected to said first conveyor and said second conveyor (111), and wherein said weighing system is configured for controlling the advancing speed of said first conveyor, for adjusting the advancing speed of said second conveyor (111) with respect to the advancing speed of said first conveyor, so as to distribute said fibrous products inside said container (103) in an even manner and fill unfilled or empty areas of said container (103), and for managing the interaction between said second conveyor (111) and said first conveyor, determining the collection point of said fibrous products inside said container (103), so as to distribute said fibrous products evenly, in other words to fill unfilled or empty areas of said container (103).

2. Apparatus (100) according to claim 1, **characterised in that** said second conveyor (111) is mounted on the apparatus (100) in a fixed manner, so as to always keep the same angle of inclination with respect to the support plane of said apparatus (100), thus compensating the uneven distribution of the fibrous products caused by the different angles of inclination that the motorised desilaging device (102) can take up with regard to the container (103).

3. Apparatus (100) according to claim 2, **characterised in that** said second conveyor (111) is fixed at its end to a pair of arms (106) on which the motorised desilaging device (102) is hinged, so as to be able to always maintain its predetermined inclination with respect to the first conveyor and allow the even depositing of the fibrous products loaded before.

4. Apparatus (100) according to claim 1, **characterised in that** it comprises at least one storage unit (103a) of said fibrous products loaded by said first conveyor, said storage unit (103a) being delimited between said first conveyor, said second conveyor (111) and said container (103) and allowing a predetermined amount of fibrous products to accumulate when the advancing speed of said second conveyor (111) is lower than the advancing speed of said first conveyor.

5. Apparatus (100) according to any one of claims 1 to 4, **characterised in that** said second conveyor (111) is arranged at least partially, preferably completely, outside of said container (103).

6. Apparatus (100) according to any one of claims 1 to 5, **characterised in that** said second conveyor (111) has a substantially triangular configuration, comprising:
- a first conveying branch (111a) extending from said first conveyor towards said container (103);
- a second conveying branch (111b), inclined with respect to said first conveying branch (111a) and extending from said first conveying branch (111a) towards said container (103); and
- a return branch (111c) extending from said second conveying branch (111b) to said first conveying branch (111a), towards said first conveyor, said conveying branches (111a, 111b) and said return branch (111c) being mutually overlapped.

7. Apparatus (100) according to any one of claims 1 to 5, **characterised in that** said second conveyor (111) has a substantially flat configuration, comprising:
- a single conveying branch (111a) extending from said first conveyor towards said container (103); and
- a single return branch (111c) extending in the opposite direction with respect to said single conveying branch (111a), said single conveying branch (111a) and said single return branch (111c) being mutually overlapped.

8. Apparatus (100) according to any one of the previous claims, **characterised in that** the interaction between said first conveyor and said second conveyor (111) can be controlled by an operator through a driving cabin (105) of said apparatus (100), or remotely through remote control means.

9. Apparatus (100) according to any one of the previous claims, **characterised in that** it comprises automatic control means for controlling the interaction between said first conveyor and said second conveyor (111), said automatic control means comprising:
- at least one detector of the filling state of the container (103), said detector being configured to emit at least one notification signal relative to the filling state of said container (103); and
- at least one programmable electronic unit connected to said first conveyor and to said second conveyor (111) to automatically control, as a function of the notification signal of the filling state emitted by the detector, the interaction between said first conveyor and second conveyor (111), so as to distribute the fibrous products inside said container (103) preferably filling unfilled or empty areas of said container (103).

## Patentansprüche

1. Vorrichtung (100) zum Laden von Faserprodukten, umfassend:
- mindestens ein motorisiertes Siloentnahmegerät (102),
- mindestens einen ersten Förderer,
- mindestens einen Behälter (103) und
- mindestens einen zweiten Förderer (111), der funktionsfähig zwischen dem ersten Förderer und dem Behälter (103) angeordnet ist,
wobei das motorisierte Siloentnahmegerät (102) zum Laden der Faserprodukte auf den ersten Förderer gestaltet ist, wobei der erste Förderer zum Transportieren der Faserprodukte zu dem Behälter (103) hin gestaltet ist und der zweite Förderer (111) zum Aufnehmen der Faserprodukte von dem ersten Förderer und zum Verteilen der Faserprodukte im Inneren des Behälters (103) gestaltet ist, wobei die Vorrichtung (100) **dadurch gekennzeichnet ist, dass** sie ein Wiegesystem zum Wiegen der in das Innere des Behälters (103) geladenen Faserprodukte umfasst, wobei das Wiegesystem funktionsfähig mit dem ersten Förderer und dem zweiten Förderer (111) verbunden ist und wobei das Wiegesystem zum Steuern der Vorwärtsbewegungsgeschwindigkeit des ersten Förderers, zum Justieren der Vorwärtsbewegungsgeschwindigkeit des zweiten Förderers (111) in Bezug auf die Vorwärtsbewegungsgeschwindigkeit des ersten Förderers, so dass die Faserprodukte im Inneren des Behälters (103) gleichmäßig verteilt werden und ungefüllte oder leere Bereiche des Behälters (103) füllen, und zum Lenken der Interaktion zwischen dem zweiten Förderer (111) und dem ersten Förderer gestaltet ist und dabei den Auffangpunkt der Faserprodukte im Inneren des Behälters (103) bestimmt, so dass die Faserprodukte gleichmäßig verteilt werden, mit anderen Worten ungefüllte oder leere Bereiche des Behälters (103) gefüllt werden.

2. Vorrichtung (100) nach Anspruch 1, **dadurch gekennzeichnet, dass** der zweite Förderer (111) fest an der Vorrichtung (100) montiert ist, so dass er stets denselben Neigungswinkel in Bezug auf die Stützebene der Vorrichtung (100) bildet, wodurch die ungleichmäßige Verteilung der Faserprodukte kompensiert wird, die durch die unterschiedlichen Neigungswinkel verursacht wird, die das motorisierte Siloentnahmegerät (102) in Bezug auf den Behälter (103) einnehmen kann.

3. Vorrichtung (100) nach Anspruch 2, **dadurch gekennzeichnet, dass** der zweite Förderer (111) an seinem Ende an einem Paar von Armen (106) befestigt ist, an denen das motorisierte Siloentnahmegerät (102) angelenkt ist, so dass er in der Lage ist, stets seine festgelegte Neigung in Bezug auf den ersten Förderer beizubehalten und die gleichmäßige Ablage der zuvor geladenen Faserprodukte zu ermöglichen.

4. Vorrichtung (100) nach Anspruch 1, **dadurch gekennzeichnet, dass** sie mindestens eine Aufbewahrungseinheit (103a) der durch den ersten Förderer geladenen Faserprodukte umfasst, wobei die Aufbewahrungseinheit (103a) zwischen dem ersten Förderer, dem zweiten Förderer (111) und dem Behälter (103) eingegrenzt ist und das Ansammeln einer festgelegten Menge von Faserprodukten ermöglicht, wenn die Vorwärtsbewegungsgeschwindigkeit des zweiten Förderers (111) geringer ist als die Vorwärtsbewegungsgeschwindigkeit des ersten Förderers.

5. Vorrichtung (100) nach einem der Ansprüche 1 bis 4, **dadurch gekennzeichnet, dass** der zweite Förderer (111) zumindest teilweise, vorzugsweise vollständig, außerhalb des Behälters (103) angeordnet ist.

6. Vorrichtung (100) nach einem der Ansprüche 1 bis 5, **dadurch gekennzeichnet, dass** der zweite Förderer (111) eine im Wesentlichen dreieckige Gestaltung aufweist, umfassend:
- einen ersten Förderableger (111a), der sich von dem ersten Förderer zu dem Behälter (103) hin erstreckt;
- einen zweiten Förderableger (111b), der in Bezug auf den ersten Förderableger (111a) geneigt ist und sich von dem ersten Förderableger (111a) zu dem Behälter (103) hin erstreckt, und
- einen Rückführableger (111c), der sich von dem zweiten Förderableger (111b) zu dem ersten Förderableger (111a) erstreckt, hin zu dem ersten Förderer, wobei die Förderableger (111a, 111b) und der Rückführableger (111c) einander überlappen.

7. Vorrichtung (100) nach einem der Ansprüche 1 bis 5, **dadurch gekennzeichnet, dass** der zweite Förderer (111) eine im Wesentlichen flache Gestaltung aufweist, umfassend:
- einen einzelnen Förderableger (111a), der sich von dem ersten Förderer zu dem Behälter (103) hin erstreckt, und
- einen einzelnen Rückführableger (111c), der sich in die entgegengesetzte Richtung in Bezug auf den einzelnen Förderableger (111a) erstreckt, wobei der einzelne Förderableger (111a) und der einzelne Rückführableger (111c) einander überlappen.

8. Vorrichtung (100) nach einem der vorhergehenden Ansprüche, **dadurch gekennzeichnet, dass** die Interaktion zwischen dem ersten Förderer und dem zweiten Förderer (111) von einem Maschinenführer über eine Fahrerkabine (105) der Vorrichtung (100) oder aus der Ferne über Fernsteuerungsmittel gesteuert werden kann.

9. Vorrichtung (100) nach einem der vorhergehenden Ansprüche, **dadurch gekennzeichnet, dass** sie automatische Steuerungsmittel zum Steuern der Interaktion zwischen dem ersten Förderer und dem zweiten Förderer (111) umfasst, wobei die automatischen Steuerungsmittel umfassen:
- mindestens einen Detektor für den Füllzustand des Behälters (103), wobei der Detektor dafür gestaltet ist, mindestens ein Benachrichtigungssignal bezogen auf den Füllzustand des Behälters (103) auszugeben, und
- mindestens eine programmierbare elektronische Einheit, die mit dem ersten Förderer und dem zweiten Förderer (111) verbunden ist, um in Abhängigkeit von dem vom Detektor ausgegebenen Benachrichtigungssignal über den Füllzustand die Interaktion zwischen dem ersten Förderer und dem zweiten Förderer (111) automatisch zu steuern, so dass die Faserprodukte im Inneren des Behälters (103) verteilt werden, wobei vorzugsweise ungefüllte oder leere Bereiche des Behälters (103) gefüllt werden.

## Revendications

1. Appareil (100) de chargement de produits fibreux, comprenant.
- au moins un dispositif de désilage motorisé (102),
- au moins un premier convoyeur,
- au moins un conteneur (103), et
- au moins un second convoyeur (111) fonctionnellement agencé entre ledit premier convoyeur et ledit conteneur (103),
ledit dispositif de désilage motorisé (102) étant configuré pour charger lesdits produits fibreux sur ledit premier convoyeur, ledit premier convoyeur étant configuré pour transporter lesdits produits fibreux vers ledit conteneur (103), et ledit second convoyeur (111) étant configuré pour recevoir lesdits produits fibreux dudit premier convoyeur et pour distribuer lesdits produits fibreux à l'intérieur du conteneur (103), ledit appareil (100) étant **caractérisé en ce qu'**il comprend un système de pesée destiné à peser les produits fibreux chargés à l'intérieur du conteneur (103), ledit système de pesée étant fonctionnellement connecté audit premier convoyeur et audit second convoyeur (111), et ledit système de pesée étant configuré pour contrôler la vitesse d'avancement dudit premier convoyeur, pour ajuster la vitesse d'avancement dudit second convoyeur (111) par rapport à la vitesse d'avancement du premier convoyeur, de sorte à distribuer lesdits produits fibreux à l'intérieur dudit conteneur (103) de façon uniforme et à remplir les zones non remplies ou vides dudit conteneur (103), et pour gérer l'interaction entre ledit second convoyeur (111) et ledit premier convoyeur, déterminant le point de collecte desdits produits fibreux à l'intérieur dudit conteneur (103), de sorte à distribuer lesdits produits fibreux uniformément, en d'autres termes pour remplir les zones non remplies ou vides dudit conteneur (103).

2. Appareil (100) selon la revendication 1, **caractérisé en ce que** ledit second convoyeur (111) est monté sur l'appareil (100) de manière fixe, de sorte à toujours maintenir le même angle d'inclinaison par rapport au plan de support dudit appareil (100), compensant ainsi la distribution non uniforme des produits fibreux causée par des angles d'inclinaison différents que le dispositif de désilage motorisé (102) peut prendre par rapport au conteneur (103)

3. Appareil (100) selon la revendication 2, **caractérisé en ce que** ledit second convoyeur (111) est fixé à son extrémité à une paire de bras (106) sur lesquels le dispositif de désilage motorisé (102) est articulé, de sorte à pouvoir toujours maintenir l'inclinaison prédéterminée par rapport au premier convoyeur et à permettre le dépôt uniforme des produits fibreux chargés auparavant.

4. Appareil (100) selon la revendication 1, **caractérisé en ce qu'**il comprend au moins une unité de stockage (103a) desdits produits fibreux chargés par ledit premier convoyeur, ladite unité de stockage (103a) étant délimitée entre ledit premier convoyeur, ledit second convoyeur (111) et ledit conteneur (103) et permettant à une quantité prédéterminée de produits fibreux de s'accumuler lorsque la vitesse d'avancement dudit second convoyeur (111) est inférieure à la vitesse d'avancement dudit premier convoyeur.

5. Appareil (100) selon l'une des revendications 1 à 4, **caractérisé en ce que** ledit second convoyeur (111) est disposé au moins partiellement, de préférence complètement, en dehors dudit conteneur (103).

6. Appareil (100) selon l'une des revendications 1 à 5, **caractérisé en ce que** ledit second convoyeur (111) a une configuration sensiblement triangulaire, comprenant:
- une première branche de convoyage (111a) s'étendant dudit premier convoyeur vers ledit conteneur (103);
- une seconde branche de convoyage (111b), inclinée par rapport à la première branche de convoyage (111a) et s'étendant de ladite première branche de convoyage (111a) vers ledit conteneur (103); et
- une branche de retour (111c) s'étendant de ladite seconde branche de convoyage (111b) vers ladite première branche de convoyage (111a), vers ledit premier convoyeur, lesdites branches de convoyage (111a, 111b) et ladite branche de retour (111c) étant mutuellement chevauchées.

7. Appareil (100) selon l'une des revendications 1 à 5, **caractérisé en ce que** ledit second convoyeur (111) a une configuration sensiblement plate, comprenant:
- une seule branche de convoyage (111a) s'étendant dudit premier convoyeur vers ledit conteneur (103); et
- une seule branche de retour (111c) s'étendant dans la direction opposée par rapport à ladite seule branche de convoyage (111a), ladite seule branche de convoyage (111a) et ladite seule branche de retour (111c) étant mutuellement chevauchées.

8. Appareil (100) selon l'une des revendications précédentes, **caractérisé en ce que** l'interaction entre ledit premier convoyeur et ledit second convoyeur (111) peut être contrôlée par un opérateur à travers une cabine de commande (105) dudit appareil (100), ou à distance au moyen d'une télécommande.

9. Appareil (100) selon l'une des revendications précédentes, **caractérisé en ce qu'**il comprend des moyens de commande automatique pour contrôler l'interaction entre ledit premier convoyeur et ledit second convoyeur (111), lesdits moyens de commande automatique comprenant:
- au moins un détecteur de l'état de remplissage du conteneur (103), ledit détecteur étant configuré pour émettre au moins un signal de notification relatif à l'état de remplissage dudit conteneur (103); et
- au moins une unité électronique programmable connectée audit premier convoyeur et audit second convoyeur (111) pour contrôler automatiquement, comme une fonction de signal de notification de l'état de remplissage émis par le détecteur, l'interaction entre ledit premier convoyeur et ledit second convoyeur (111), de sorte à distribuer les produits fibreux à l'intérieur dudit conteneur (103) remplissant de préférence les zones non remplies ou vides dudit conteneur (103).
